## Europäisches Patentamt

## European Patent Office

## Office européen des brevets

(19)

(11) Veröffentlichungsnummer: **0 099 500**
**B1**

(12) # EUROPÄISCHE PATENTSCHRIFT

(45) Veröffentlichungstag der Patentschrift:
**11.03.87**

(51) Int. Cl.⁴: **G 04 F 10/04,** G 01 S 7/48

(21) Anmeldenummer: **83106473.8**

(22) Anmeldetag: **02.07.83**

(54) **Vorrichtung zur Laufzeitmessung von Impulsen.**

(30) Priorität: **13.07.82 CH 4269/82**

(43) Veröffentlichungstag der Anmeldung:
**01.02.84 Patentblatt 84/5**

(45) Bekanntmachung des Hinweises auf die Patenterteilung:
**11.03.87 Patentblatt 87/11**

(84) Benannte Vertragsstaaten:
**DE FR GB SE**

(56) Entgegenhaltungen:
**DE - A - 2 136 969**
**DE - A - 2 842 450**
**FR - A - 2 437 648**
**US - A - 3 296 525**
**US - A - 3 505 594**
**US - A - 3 541 448**

**NACHRICHTENTECHNISCHE ZEITSCHRIFT, Heft 9, 1973, Seiten 435-440, Berlin, DE. J. RIEGL: "Messung kurzer Entfernungen mit Hilfe optischer Impulsradargeräte"**

(73) Patentinhaber: **WILD HEERBRUGG AG.,**
**CH-9435 Heerbrugg (CH)**

(72) Erfinder: **Giger, Kurt, Karl-Völkerstrasse 22,**
**CH-9435 Heerbrugg (CH)**

(74) Vertreter: **EGLI-EUROPEAN PATENT ATTORNEYS,**
**Horneggstrasse 4, CH-8008 Zürich (CH)**

**Beschreibung**

Die Erfindung betrifft eine Vorrichtung zur Laufzeitmessung von elektrischen Impulssignalen mit einer Auswerteschaltung, bestehend aus einem Grobmesszähler und Mitteln zur Feinmessinterpolation, wobei der Grobmesszähler Taktimpulsperioden eines Referenzoszillators zwischen einem Start- und einem Stoppsignal zählt, und die Mittel zur Feinmessinterpolation die Restzeit zwischen dem Stoppsignal und der nächsten Taktimpulsflanke des Referenzoszillators ermitteln.

Optische Impulsradargeräte messen Entfernungen bekanntlich durch Anwendung des Laufzeitprinzips. Der zeitliche Abstand zwischen einem Sendesignal und einem Empfangssignal (Echosignal) wird als Mass für die Entfernung benutzt. Zwischen diesen beiden Signalen werden die Impulse gezählt, die ein Quarzoszillator mit fester Frequenz in einer Auswerteschaltung liefert. Das Sendesignal wird als Startsignal und das Empfangs- bzw. Echosignal wird als Stoppsignal für die Auswerteschaltung benutzt. Die Einzelheiten können dem Aufsatz «Messung kurzer Entfernungen mit Hilfe optischer Impulsradargeräte», Nachrichtentechnische Zeitschrift, 1973, Heft 9, Seiten 535 bis 440, entnommen werden. Bei dieser Zählweise ergibt sich die Schwierigkeit, dass keine Korrelation besteht zwischen dem die Impulszählung beginnenden Sendesignal (Startleitung) und den Flanken der Impulse des Quarzoszillators sowie zwischen dem die Impulszählung beendenden Empfangssignal (Echosignal) und den Impulsflanken des Oszillators. Am Anfang und Ende der Impulszählung bleiben daher Restzeiten unberücksichtigt, die für die Entfernungsmessung nicht ausgewertet werden. Jede dieser nicht erfassten Restzeiten ist kleiner als eine volle Mess-Impulsperiode. Für eine grobe Entfernungsmessung im Kilometer- und Meterbereich ist die Vernachlässigung dieser Restzeiten durchaus zulässig. Für genaue Entfernungsmessungen im Zentimeter- und Millimeterbereich reicht die erwähnte Messmethode jedoch nicht mehr aus.

Durch die DE-OS 2 842 450 und die US-PS 3 541 448 sind Verfahren und Vorrichtungen bekannt, die mit einer Grobmessung die Laufzeit grob ermitteln und mit zusätzlichen Feinmessungen mit Hilfe von Feinmessinterpolatoren die zufälligen Restzeiten berücksichtigen, um dann durch Korrektur aus der Grobmessung die genaue Messzeit abzuleiten. Verfahren und Vorrichtungen mit Anfangssynchronisation und daher nur einem Feinmessinterpolator sind aus der DE-A 2 136 969 und US-A 3 505 594 bekannt.

Es ist Aufgabe der Erfindung, eine Vorrichtung der eingangs genannten Art zu schaffen, welche einfacher aufgebaut ist als bekannte und welche den Aufbau eines handlichen Gerätes erlaubt, das sich ohne Schwierigkeiten mobil einsetzen lässt und trotzdem die angestrebte hohe Messgenauigkeit aufweist sowie eine einfache Bedienung, insbesondere einen einfachen Abgleichvorgang, und zuverlässige Darstellung der Messwerte erlaubt.

Diese Aufgabe wird durch die Merkmale des Patentanspruchs 1 gelöst. Mit der angegebenen Lösung wird eine einfache Zeitauswertung von analogen Spannungssignalen für jeden Messvorgang erreicht und die Voraussetzung der Miniaturisierung der Vorrichtung geschaffen, so dass sie sich in einem handlichen Gerät unterbringen lässt. Besonders vorteilhaft ist es, dass, je nach den gestellten Anforderungen an die Messgenauigkeit, über eine grössere oder kleinere Anzahl von Einzelmessungen gemittelt werden kann. Insbesondere wirkt es sich positiv auf die Messgenauigkeit aus, wenn durch geräteinterne Massnahmen über mehrere Einzelmessungen gemittelt werden kann, wobei durch zusätzliche vorteilhafte Massnahmen der Zeitpunkt für eine Interpolation über die Einzelmessungen so gewählt wird, dass der Streubereich für die einzelnen Messergebnisse gering bleibt, und damit der Fehlerbereich besonders eng gehalten wird.

Ein bevorzugtes Ausführungsbeispiel der Erfindung wird anhand der Zeichnungen näher erläutert. Es zeigen:

Fig. 1 das Blockschaltbild des beschriebenen Ausführungsbeispiels,

Fig. 2 ein Ausführungsbeispiel für das Verzögerungsglied im Ansteuerungskreis für die Sendediode in Figur 1,

Fig. 3 ein Ausführungsbeispiel, bei welchem der Taktgenerator mit dem nachfolgenden Verzögerungsglied gemäss Figur 1 zusammengefasst ist,

Fig. 4 das Beispiel einer Kennlinie für den Zeitinterpolator gemäss Figur 1, für n = 14 Einzelmessungen, und

Fig. 5 das Ausführungsbeispiel für einen vom Referenzoszillator gesteuerten Taktgenerator gemäss Figur 1.

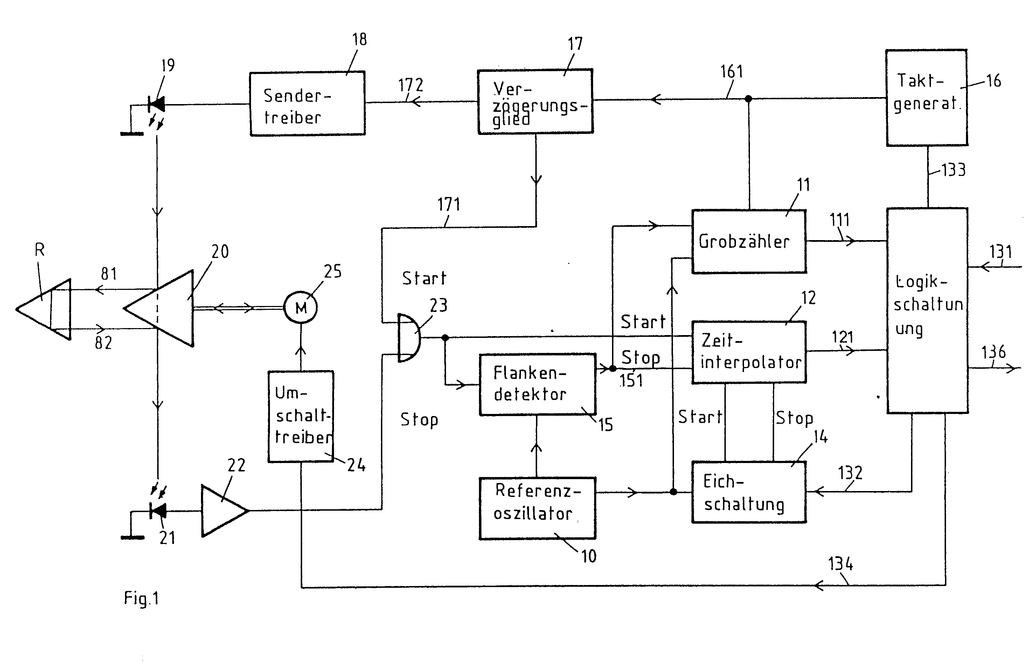

Gemäss Figur 1 ist ein Referenzoszillator 10, beispielsweise ein Quarzoszillator, auf den Eingang eines Grobmesszählers 11 sowie auf den Eingang eines Zeitinterpolators 12 geführt. Der Ausgang 111 des Grobmesszählers 11 sowie der Ausgang 121 des Zeitinterpolators 12 sind mit einer Logikschaltung 13 verbunden. Eine Ausgangsleitung 132 führt von der Logikschaltung 13 zum Steuereingang einer Eichschaltung 14, welche mit Start- und Stoppeingängen des Zeitinterpolators 12 in Verbindung steht. Der Ausgang des Referenzoszillators 10 ist ebenfalls mit der Eichschaltung 14 verbunden. Zwischen dem Referenzoszillator 10 und dem Eingang des Grobmesszählers 11 ist im Beispiel ein Flankendetektor 15 angeordnet, dessen Ausgang 151 mit dem erwähnten Eingang des Grobmesszählers und mit dem zweiten Stoppeingang des Zeitinterpolators 12 verbunden ist.

Über eine Startleitung 133 steht die Logikschaltung 13 mit einem Taktgenerator 16 in Verbindung. An den Ausgang des Taktgenerators 16 sind über eine Verbindungsleitung 161 ein Verzögerungsglied 17 und der Takteingang des Grobmesszählers 11 angeschlossen. Über eine Treiberleitung 172 steht der Ausgang des Verzögerungsglieds 17 mit einem Sendertreiber 18 in Verbindung, dem eine Sendediode 19 zur Aussendung eines Impulssignals folgt. Das ausgesendete Impulssignal passiert ein umschaltbares Optikelement 20. Das Optikelement 20 ist zwischen einer Eichposition und einer Messposition umschaltbar. In der Eichposition erreicht das von der Sendediode 19 ausgehende Impulssignal direkt eine Empfangsdiode 21. Von der Empfangsdiode 21 wird das Signal über einen Verstärker 22 als Stoppsignal einer ODER-Schaltung 23 zugeführt. Einem zweiten Eingang der ODER-Schaltung 23 wird ein Startsignal von der Leitung 171 des Verzögerungsglieds 17 zugeleitet. Der Ausgang der ODER-Schaltung 23 führt einerseits direkt als zweiter Starteingang auf den Zeitinterpolator 12 und andererseits zum Flankendetektor 15.

Zur Umschaltung des Optikelements 20 dient ein Umschalttreiber 24, der über eine Leitung 134 mit dem Ausgang der Logikschaltung 13 in Verbindung steht. Der Ausgang des Umschalttreibers 24 steuert ein Stellglied 25 zur Umschaltung des Optikelements 20.

Im folgenden wird die Funktion und das Zusammenwirken der in Figur 1 gezeigten Schaltungsblöcke näher beschrieben. Zur Auslösung eines Messzyklus wird ein Triggersignal auf einen Triggersignaleingang 131 der Logikschaltung 13 gegeben. Daraufhin erscheint auf der Ausgangsleitung 132 ein Signal, welches der Eichschaltung 14 zugeführt wird und den Eichvorgang des Zeitinterpolators 12 auslöst. Die Eichschaltung 14, welche die Referenzimpulse des Referenzoszillators 10 zugeführt bekommt, erzeugt aufgrund der Impulsflanken des Referenzoszillators 10 Start- und Stoppsignale mit genau definierten Zeitabständen, welche dem Zeitinterpolator 12 zugeführt werden. Über die Interpolatorausgangsleitung 121 gelangen die interpolierten Werte in die Logikschaltung 13, wo sie zunächst abgespeichert werden, um bei der späteren Berechnung der Laufzeit bzw. der Messdistanz Verwendung zu finden. Über die Startleitung 133 wird der Taktgenerator 16 von der Logikschaltung 13 so beeinflusst, dass er eine bestimmte Anzahl von Einzelimpulsen abgibt und damit eine bestimmte Anzahl von Einzelmessungen startet. Diese Impulsfolge kann im Beispiel bei etwa 700/Sek. liegen. Die dadurch erzeugte Serie von Einzelmessungen wird auf später beschriebene Weise zu einer Mittelwertbildung des Messergebnisses herangezogen, um die Messgenauigkeit zu verbessern.

Im folgenden wird der Ablauf einer Einzelmessung beschrieben, wobei in der Logikschaltung 13 die Ergebnisse mehrerer solcher Einzelmessungen zunächst zwischengespeichert werden. Nach Erreichen einer gewünschten Anzahl n von Einzelmessungen wird daraus ein mittlerer Messwert gebildet. Zur Auslösung einer Einzelmessung wird vom Taktgenerator 16 ein Signal auf die Verbindungsleitung 161 gegeben. Mit diesem Signal wird der Grobmesszähler zurückgesetzt und so aktiviert, dass er mit dem ersten, über Signalleitung 151 ankommenden Impuls die Grobzählung startet und mit dem zweiten Impuls wieder stoppt. Weiter gelangt das Signal auf Leitung 161 in das Verzögerungsglied 17, wo es über Leitung 171 durch die ODER-Schaltung 23 auf den zweiten Starteingang des Zeitinterpolators 12 gelangt. Im Zeitinterpolator 12 beginnt damit die Messung zwischen dem erwähnten Startsignal und dem nächsten, vom Referenzoszillator 10 abgegebenen Taktsignal, welches vom Flankendetektor 15 festgestellt wird und über Signalleitung 151 dem zweiten Stoppeingang des Zeitinterpolators 12 und dem Grobmesszähler 11 zugeführt wird. Der interpolierte Wert gelangt über die Interpolatorausgangsleitung 121 in die Logikschaltung 13.

Das zweite, zum ersten verzögerte Ausgangssignal des Verzögerungsglieds 17 auf Leitung 172 löst, nachdem es den Sendetreiber 19 durchlaufen hat, in der Sendediode 19 einen Lichtimpuls auf. Der Lichtimpuls durchläuft zunächst direkt geräteintern zum Zweck der Eichung das Optikelement 20 und fällt auf die Empfangsdiode 21. Das empfangene Signal wird über Verstärker 22 und ODER-Schaltung 23 dem zweiten Starteingang des Zeitinterpolators 12 zugeführt. Gleichzeitig wird der Flankendetektor 15 beeinflusst, der mit dem nächsten, vom Referenzoszillator abgegebenen Taktsignal den Grobzähler 11 und den Zeitinterpolator 12 über Signalleitung 151 stoppt. Die Ergebnisse des Grobzählers 11 und des Zeitinterpolators 12 gelangen über Signalleitung 111 bzw. 121 in die Logikschaltung 13. Dort werden die Ergebnisse nach Erreichen der gewünschten Anzahl solcher Einzelmessungen gemittelt und als Eich- oder Nulldistanz gespeichert.

Nach Beendigung dieses Eichvorganges wird von der Logikschaltung 13 ein Signal auf die Steuerleitung 134 gegeben, wodurch der Umschalttreiber 25 veranlasst wird, das Optikelement 20 mit Hilfe des Stellglieds 25 so umzustellen, dass die von der Sendediode 19 abgegebenen Impulssignale auf die hinlaufende Messstrecke 81 gegeben werden, worauf sie von dem zu vermessenden Ziel R reflektiert und auf die rücklaufende Messstrecke 82 zurück zu dem Optikelement 20 geleitet werden. Von diesem wird das empfangene Signal auf die Empfangsdiode 21 umgeleitet. Daraufhin erfolgt der eigentliche Messvorgang auf die gleiche Weise wie zuvor für den Eichvorgang beschrieben. Es erfolgen Einzelmessungen über die Messstrecke 81, 82. Aus den Ergebnissen dieser Einzelmessungen wird in der Logikschaltung 13 der Mittelwert gebildet, anschliessend die beim vorhergehenden Eichvorgang erhaltene Null- oder Eichdistanz subtrahiert und anschliessend das Resultat über den Geräteausgang 136 als endgültiges Messergebnis für die Wegstrecke zwischen dem Gerät und dem Zielreflektor R, vorzugsweise in einem Längenmass, z.B. in Meter, Zentimeter, Millimeter oder Inches, angezeigt oder einem externen Drucker zugeleitet.

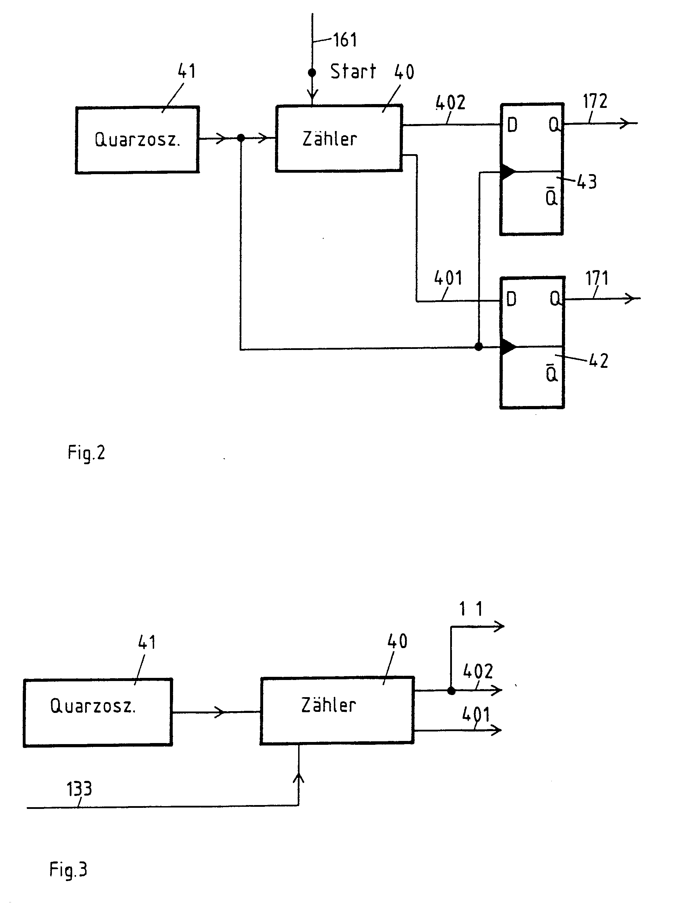

Figur 2 zeigt ein bevorzugtes Ausführungsbeispiel für das Verzögerungsglied 17 gemäss Figur 1. Die vom Taktgenerator 16 gemäss Figur 1 abgehende Verbindungsleitung 161 wird dem Startsignaleingang eines zweiten Zählers 40 zugeleitet. Dieser zählt daraufhin die von einer Impulsquelle 41, beispielsweise einem zweiten autonomen Oszillator, abgegebenen Impulsflanken. Nach einer bestimmten Anzahl solcher Impulsflanken wird vom Zähler 40 ein Signal auf Leitung 401 gegeben und nach einer weiteren Anzahl von Impulsflanken ein Signal auf eine zweite Ausgangsleitung 402. Die erste Ausgangsleitung 401 ist mit dem Signaleingang D einer impulsgetriggerten Kippschaltung 42 verbunden, während die zweite Ausgangsleitung 402 auf den Signaleingang D einer zweiten impulsgesteuerten Kippschaltung 43 geführt ist. Getriggert werden beide Kippschaltungen 42 und 43 vom zweiten Oszillator 41. Damit sind beide Kippschaltungen mit den Impulsflanken des zweiten Oszillators synchronisiert, womit die Verzögerungen zwischen den Signalen an den Ausgängen Q der beiden Kippschaltungen 42 und 43, nämlich auf den Leitungen 171 und 172, sehr genau durch die Eigenschaften des zweiten Oszillators 41 definiert sind.

Figur 3 zeigt anhand eines Ausführungsbeispiels, wie der Taktgenerator 16 gemäss Figur 1 mit der Verzögerungseinrichtung gemäss Figur 2 zusammengefasst werden kann. Die Ausgangsleitung 133 der Logikschaltung 13 gemäss Figur 1 wird auf den zweiten Zähler 40 gemäss Figur 2 geführt. Das auf Startleitung 133 erscheinende Signal startet eine Anzahl Einzelmessungen, worauf der zweite Zähler 40 die in Zusammenhang mit den Figuren 1 und 2 beschriebenen Signale auf Leitungen 161, 401 und 402 erzeugt.

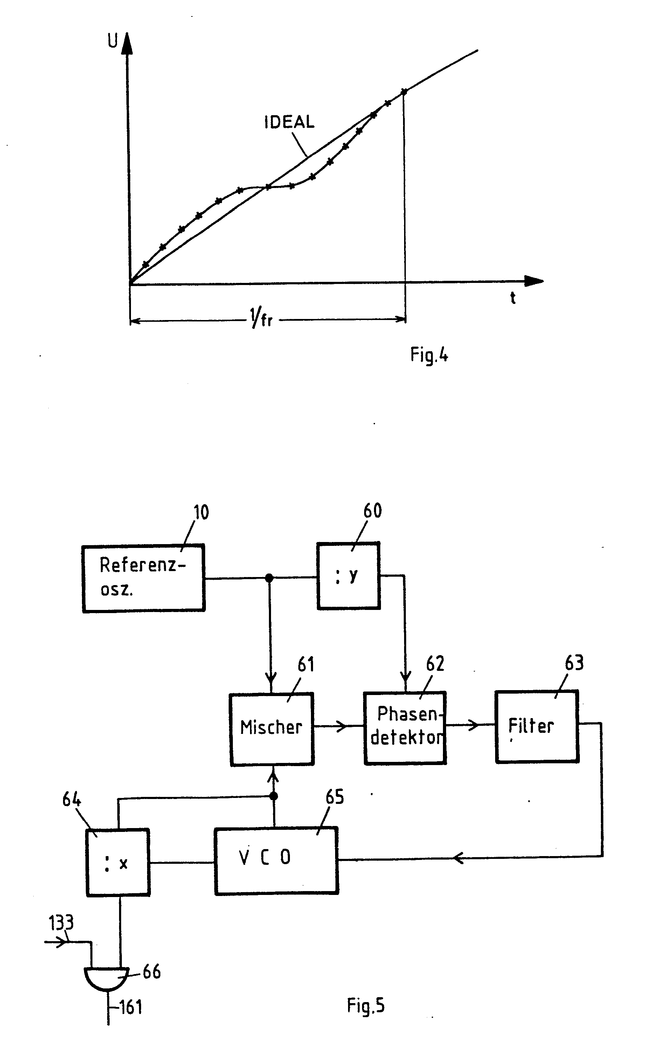

Dem Zeitinterpolator 12 gemäss Figur 1 ist eine gewisse Nichtlinearität eigen in Abhängigkeit von dem Interpolationsintervall, wodurch die Messgenauigkeit der Gesamteinrichtung bestimmt wird. Figur 4 zeigt das Beispiel eines Spannungsverlaufes am Ausgang des Zeitinterpolators 12 über ein Interpolationsintervall $1/f_r$, wobei $f_r$ die Impulsfolgefrequenz des Referenzoszillators 10 bedeutet. In Figur 4 ist der Verlauf der Spannung U über die Zeit t für n = 14 Einzelmessungen aufgetragen. Die Kurve zeigt einen typischen Verlauf der Nichtlinearität. Eingezeichnet ist ferner der linear interpolierte Verlauf, der in Figur 4 mit «ideal» bezeichnet ist. Die Messkurve ist so gelegt, dass gemäss einem bevorzugten Ausführungsbeispiel der Erfindung das auf der Leitung 171 gemäss Figur 1 erscheinende Signal mit einer bestimmten Phasenlänge zur Flanke eines vom Referenzoszillator 10 kommenden Impulses liegt. In einem solchen Fall liegt eine gleichmässige Verteilung der Messwerte über die Zeit vor, wie es in Figur 4 gezeigt ist. Dies bedeutet, dass bei einer Synchronisierung des Taktgenerators 16 auf den Referenzoszillator 10 bei einer Mittelung von n Messwerten die Genauigkeit der Gesamtschaltung wesentlich verbessert wird.

Figur 5 zeigt ein bevorzugtes Ausführungsbeispiel, mit welchem die erwähnte Synchronisierung zwischen dem Taktgenerator 16 und dem Referenzoszillator 10 erreicht wird. Gemäss Figur 5 ist der Ausgang des Referenzoszillators 10 einerseits mit einem ersten Teiler 60 und andererseits mit einem Mischer 61 verbunden. Die Ausgänge des ersten Teilers 60 sowie des Mischers 61 führen auf einen Phasendetektor 62, dem ein Filter 63 nachgeschaltet ist. Der Ausgang des Filters ist mit einem spannungsgesteuerten Oszillator 65 verbunden, dessen Ausgang einerseits mit dem Mischer 61 in Verbindung steht und andererseits zu einem zweiten Teiler 64 führt. Der Ausgang des zweiten Teilers 64 ist mit dem Eingang einer UND-Schaltung 66 verbunden, welche auf einem zweiten Eingang mit der Startleitung 133 gemäss Figur 1 verbunden ist. Der Ausgang der UND-Schaltung 66 bildet die Leitung 161 gemäss Figur 1. Gemäss einem bevorzugten Ausführungsbeispiel beträgt die Referenzfrequenz des Referenzoszillators 10 15 MHz, das Teilerverhältnis x des zweiten Teilers 64 21520, das Teilerverhältnis y des ersten Teilers 60 1025. In diesem Fall beträgt die Taktfrequenz auf Leitung 161 gemäss Figur 5 ungefähr 700 Hz.

**Patentansprüche**

1. Vorrichtung zur Laufzeitmessung von Impulssignalen, mit einer Auswerteschaltung, bestehend aus einem Grobmesszähler (11) und Mitteln (12) zur Feinmessinterpolation, wobei der Grobmesszähler (11) Taktimpulsperioden eines Referenzoszillators (10) zwischen einem Start- und einem Stoppsignal zählt und die Mittel (12) zur Feinmessinterpolation Restzeiten zwischen dem Startbzw. Stoppsignal und der nächstfolgenden Taktimpulsflanke des Referenzoszillators (10) ermitteln, dadurch gekennzeichnet, dass nur ein Feinmessinterpolator (12) zur zeitlich getrennten Interpolation der Restzeit zwischen dem Startsignal und der nächstfolgenden Taktimpulsflanke bzw. dem Stoppsignal und der darauffolgenden Taktimpulsflanke des Referenzoszillators (10) vorgesehen ist.

2. Vorrichtung nach Patentanspruch 1, gekennzeichnet durch Mittel (17, 23) zur die zeitlich getrennte Interpolation ermöglichenden Steuerung der zeitlich getrennten Zuführung des STARTbzw. des STOP-Signals zum Feinmessinterpolator (12).

3. Vorrichtung nach Patentanspruch 2, dadurch gekennzeichnet, dass sie ein gesteuertes Schaltmittel (23) enthält, dass der erste Steuereingang (START) dieses Mittels mit einem Startsignal (171) belegbar ist, dass dem zweiten Steuereingang (STOP) ein um die für die erste Interpolation erforderliche Zeitspanne verzögertes STOP-Signal zugeführt werden kann, dass der Ausgang der Schaltmittel (23) mit dem START-Eingang des Feinmessinterpolators verbunden ist und, dass der STOP-Eingang des Feinmessinterpolators (12) mit dem Referenzoszillator (10) über einen Flankendetektor (15) in Verbindung steht.

4. Vorrichtung nach Patentanspruch 2, dadurch gekennzeichnet, dass ein mit einer Startleitung (133) versehener Taktgenerator (16) vorgesehen ist, der bei Empfang eines Startsignals auf der Startleitung (133) eine einstellbare Serie von Taktimpulsen auf eine Verbindungsleitung (161) abgibt, welche zum Verzögerungsglied (17) der Mittel zur zeitlich getrennten Zuführung des STARTbzw. STOP-Signals führt.

5. Vorrichtung nach Patentanspruch 4, dadurch gekennzeichnet, dass ein erster Ausgang (171) des Verzögerungsglieds (17) auf den ersten Steuereingang (START) eines Schaltmittels (23) geführt ist, dass die Verbindungsleitung (161) als Zähler-Startleitung mit dem Grobmesszähler (11) verbunden ist, und dass ein zweiter Ausgang (172) des Verzögerungsgliedes (17) als Treiberleitung mit einem Sendetreiber (18) verbunden ist.

6. Vorrichtung nach Patentanspruch 5, dadurch gekennzeichnet, dass als Verzögerungsglied (17) ein zweiter Oszillator (41) vorgesehen ist, dem ein zweiter Zähler (40) nachgeschaltet ist, wobei ein Starteingang des zweiten Zählers (40) mit der vom Taktgenerator (16) kommenden Verbindungsleitung (161) verbunden ist, dass einem ersten Ausgang (401) des zweiten Zählers (40) für das Erreichen einer ersten Zählrate eine erste triggerbare Kippschaltung (42) nachgeschaltet ist, deren Ausgang an die Startsignalleitung (171) angeschlossen ist, und dass einem zweiten Ausgang (402) des zweiten Zählers (40), der bei Erreichen einer zweiten Zählrate aktiviert ist, eine zweite triggerbare Kippschaltung (43) nachverbunden ist, deren Ausgang auf die Treiberleitung (172) führt, und dass die Triggereingänge beider Kippschaltungen (42, 43) an den Ausgang des zweiten Oszillators (41) angeschlossen sind.

7. Vorrichtung nach Patentanspruch 5, dadurch gekennzeichnet, dass als Verzögerungsglied (17) ein zweiter Oszillator (41) vorgesehen ist, dem ein zweiter Zähler (40) nachgeschaltet ist, wobei ein Starteingang des zweiten Zählers (40) mit der vom Taktgenerator (16) kommenden Verbindungsleitung (161) verbunden ist, dass einem ersten Ausgang des zweiten Zählers (40) für das Erreichen einer ersten Zählrate (401) eine erste triggerbare Kippschaltung (42) nachgeschaltet ist, deren Ausgang an die Startsignalleitung (171) angeschlossen ist, und dass einem zweiten Ausgang (402) des zweiten Zählers (40), der bei Erreichung einer zweiten Zählrate aktiviert ist, eine zweite triggerbare Kippschaltung (43) nachverbunden ist, deren Ausgang auf die Treiberleitung (172) führt, dass die Triggereingänge beider Kippschaltungen (42, 43) an den Ausgang des zweiten Oszillators (41) angeschlossen sind, dass ein zweiter Steuereingang des zweiten Zählers (40) mit der Startleitung (133) verbunden ist, und dass der zweite Ausgang (402) des zweiten Zählers (40) auch an die Zähler-Startleitung für den Grobzähler (11) angeschlossen ist.

8. Vorrichtung nach Patentanspruch 2, dadurch gekennzeichnet, dass ein Taktgenerator (16) zur Abgabe des Startsignals auf eine Verbindungsleitung (161) vorgesehen ist, welche zu einem Verzögerungsglied (17) der Mittel zur Steuerung der zeitlichen Folge des Start- bzw. Stoppsignals führt, dass der Taktgenerator (16) mit einem Referenzoszillator (10) in Verbindung steht, dass im Taktgenerator (16) dem Referenzoszillator (10) ein erster Teiler (60) sowie parallel dazu ein Mischer nachgeschaltet sind, dass die Ausgänge des ersten Teilers (60) und des Mischers (61) mit einem Phasendetektor (62) verbunden sind, dem ein Filter (63) nachgeschaltet ist, dass dem Filter (63) ein spannungsgesteuerter Oszillator (65) folgt, dessen Ausgang einerseits mit dem Mischer (61) und andererseits mit einem zweiten Teiler (64) verbunden ist, und dass der Ausgang des zweiten Teilers (64) mit dem Eingang einer UND-Schaltung (66) verbunden ist, deren zweiter Eingang eine Startleitung (133) zur Anzeige des Messbeginns zugeführt ist, wobei der Ausgang der UND-Schaltung (66) an die Verbindungsleitung (161) angeschlossen ist.

**Claims**

1. Device for measuring pulse periodes, with a strobing circuit, consisting of a coarse measuring counter (11) and means (12) for precision measuring interpolation, whereby the coarse measuring counter (11) counts timing pulses of a reference oscillator (10) between a start and a stop signal, and the means (12) for precision interpolation determines the residual times between the start and stop signals, respectively, and the next following timing pulse edge of the reference oscillator (10), characterized in that only one precision measuring interpolator (12) is provided for time-separated interpolation of the residual time between the start signal and the next following time pulse edge and the stop signal, respectively, and the following time pulse edge of the reference oscillator (10).

2. Device according to claim 1, characterized by means (17, 23) making possible time-divided interpolation allowing control of the time-divided supply of the START- or STOP-signals to the precision measuring interpolator (12).

3. Device according to claim 2, characterized in that it contains controlled switching means (23), that the first control input (START) of this means can be provided with a start signal (171), that a STOP-signal can be supplied to the second control input (STOP), which signal is delayed by the time necessitated for the first interpolation, that the output of the switching means (23) is connected with the START-input of the precision measuring interpolator (12), and that the STOP-input of the precision measuring interpolator (12) is connected with the reference oscillator (10) via an edge detector (15).

4. Device according to claim 2, characterized in that a clock generator (16) provided with a starter line (133) is provided, which generator (16) on receipt of a start signal on the starter line (133) supplies an adjustable row of clock pulses on a connecting line (161), leading to the delay element (17) of the means (17, 23) for the time-divided supply of the START- or STOP-signals.

5. Device according to claim 4, characterized in that a first output (171) of the delay element (17) is connected with the first control input (START) of a switching means (23), that the connecting line (161) is connected as counter starter line with the coarse counter (11), and that a second ouput (172) of the delay element (17) is connected as driveer line with a transmitter driver (18).

6. Device according to claim 5, characterized in that a second oscillator (41) serves as delay element (17) and is followed by a second counter (40), that the start input of which is connected with the connecting line (161) from the clock generator (16), that a first input (401) of the second counter (40) is connected for reaching a first counting rate and is followed by a triggerable sweep circuit (42), that the output of which is being connected with the start signal line (171), and that a second sweep circuit (43) is connected with a second output (402) of the second counter (40), which is activated when a second counting rate has been reached, the output of said sweep circuit (43) being connected on the driver line (172), and that the trigger inputs of both sweep circuits (42, 43) are connected with the output of the second oscillators (41).

7. Device according to claim 5, characterized in that a second oscillator (41) serves as delay element (17), that is followed by a second counter (40), the start input of which being connected with the line (161) from the clock generator (16), that a first output of the second counter (40) for reaching a first counting rate (401) of a triggerable sweep circuit (42), the output of which being connected with the start signal line (171), and that a second triggerable sweep circuit (43) is connected with a second output (402) of a second counter (40), which is activated when a second counting rate has been reached, the output of said sweep circuit (43) leading to the drive line (172), that the trigger inputs of both sweep circuits (42, 43) is connected with the output of the second oscillator (41), that a second control input of the second counter (40) is connected with the start line (133), and that the second output (402) of the first counter (40) is also being connected with the counter start line for the coarse measuring counter (11).

8. Device according to claim 2, characterized in that a clock generator (16) has been provided for the supply of a start signal on a connecting line (161), which leads to a delay element (17) of the means for the control of the clocked row of the start or stop signal, that the clock generator (16) is connected with a reference oscillator (10), that a first divider (60) as well as parallel thereto, a mixer follow the reference oscillator (10) in the clock generator (16), that the outputs of the first divider (60) and the mixer (61) are connected with a phase detector (62), that is followed by a filter (63), which again is followed by a voltage controlled oscillator, the output of which is connected to the mixer as well as with a second divider (64), and that the output of the second divider (64) is connected to the input of an AND-circuit (66), that at the second input of which a start line (133) is connected to show the begin of the measuring, and that the output of the AND-circuit (66) is connected with the connecting line (161).

**Revendications**

1. Dispositif pour la mesure du temps de transit de signaux impulsionnels, avec un circuit d'évaluation, se composant d'un compteur de mesures grossières (11) et de moyens (12) pour l'interpolation de mesures précises, où le compteur de mesures grossières (11) compte les périodes d'impulsions de synchronisation d'un oscillateur de référence (10) entre un signal de début et un signal d'arrêt et les moyens (12) font la moyenne, pour l'interpolation de mesures précises, des temps résiduels entre le signal de début ou respectivement d'arrêt et le flanc d'impulsion de synchronisation suivant de l'oscillateur de référence (10), caractérisé en ce qu'un seul interpolateur de mesures précises (12) est prévu, pour l'interpolation séparée dans le temps, du temps résiduel entre le signal de début et le flanc de l'impulsion de synchronisation suivante ou respectivement le signal d'arrêt et le flanc de l'impulsion de synchronisation suivante de l'oscillateur de référence (10).

2. Dispositif selon la revendication 1, caractérisé par des moyens (17, 23) pour la commande permettant l'interpolation séparée dans le temps de l'application séparée dans le temps du signal de DEBUT ou respectivement d'ARRET à l'interpolateur de mesures précises (12).

3. Dispositif selon la revendication 2, caractérisé en ce qu'il contient un moyen commandé de commutation (23), en ce qu'à une première entrée de commande (DEBUT) de ce moyen peut être appliqué un signal de début (171), en ce qu'à la seconde entrée de commande (ARRET) peut être appliqué un signal d'ARRET retardé d'un intervalle de temps nécessaire pour la première interpolation, en ce que la sortie du moyen de commutation (23) est reliée à l'entrée de DEBUT de l'interpolateur de mesures précises, en ce que l'entrée d'ARRET de l'interpolateur de mesures précises (12) est reliée à l'oscillateur de référence (10) par un détecteur de flanc (15).

4. Dispositif selon la revendication 2, caractérisé en ce qu'un générateur d'impulsions (16) est prévu, qui est pourvu d'une conduite de DEBUT (133), lequel à la réception d'un signal de DEBUT sur la conduite de début (133), émet une série réglable d'impulsions de synchronisation sur une conduite de jonction, qui conduit à l'organe retardateur (17) du moyen pour l'application séparée dans le temps du signal de DEBUT ou respectivement d'ARRET.

5. Dispositif selon la revendication 4, caractérisé en ce qu'une première sortie (171) de l'organe retardateur (17) est conduite à la première entrée de commande (DEBUT) d'un moyen de commutation (23), en ce que la conduite de liaison (161) est reliée, en tant que conduite de début de compteur, au compteur de mesures grossières (11) et en ce qu'une seconde sortie (172) de l'organe retardateur (17) est reliée, en tant que conduite d'attaque, à un amplificateur d'émetteur (18).

6. Dispositif selon la revendication 5, caractérisé en ce qu'en tant qu'organe retardateur (17), est prévu un second oscillateur (41), qui est suivi d'un second compteur (40), une entrée de début du second compteur (40) étant reliée à la conduite (161) provenant du générateur d'impulsions (16), en ce qu'une première sortie (401) du second compteur (40) est suivie d'une première bascule déclenchable (42) pour atteindre un premier taux de compte, dont la sortie est raccordée à la conduite de signaux de début (171), et en ce qu'une seconde sortie (402) du second compteur (40), qui est actionné lorsqu'est atteint un second taux de compte, est suivie d'une bascule déclenchable (43), dont la sortie conduit à la conduite d'attaque (172) et en ce que les entrées de déclenchement des deux bascules (42, 43) sont raccordées à la sortie du second oscillateur (41).

7. Dispositif selon la revendication 5, caractérisé en ce qu'en tant qu'organe retardateur (17) est prévu un second oscillateur (41), qui est suivi d'un second compteur (40), une entrée de début du second compteur (40) étant reliée à la conduite (161) provenant du générateur d'impulsions (16), en ce qu'une première sortie du second compteur (40) pour atteindre un premier taux de compte (401), est suivie d'une bascule déclenchable (42), dont la sortie est raccordée à la conduite de signaux de début (171) et en ce qu'une seconde sortie (402) du second compteur (40), qui est actionnée lorsqu'est atteint un second taux de compte, est suivie d'une seconde bascule déclenchable (43), dont la sortie conduit à la conduite d'attaque (172), en ce que les entrées de déclenchement des deux bascules (42, 43) sont raccordées à la sortie du second oscillateur (41), en ce qu'une seconde entrée de commande du second compteur (40) est reliée à la conduite de début (133) et en ce que la seconde sortie (402) du second compteur (40) est également raccordée à la conduite de début de compteur pour le compteur de mesures grossières (11).

8. Dispositif selon la revendication 2, caractérisé en ce qu'un générateur d'impulsions (16) est prévu pour l'application du signal de début à une conduite (161), qui mène à un organe retardateur (17) du moyen pour la commande de la suite dans le temps des signaux de début ou respectivement d'arrêt, en ce que le générateur d'impulsions (16) est relié à un oscillateur de référence (10), en ce que dans le générateur d'impulsions (16), l'oscillateur de référence (10) est suivi d'un premier diviseur (60) ainsi que d'un mélangeur qui lui est relié en parallèle, en ce que les sorties du premier diviseur (60) et du mélangeur (61) sont reliées à un détecteur de phase (62), qui est suivi d'un filtre (63), en ce que le filtre (63) est suivi d'un oscillateur commandé par la tension (65), dont la sortie est reliée d'une part au mélangeur (61) et d'autre part à un second diviseur (64) et en ce que la sortie du second diviseur (64) est reliée à l'entrée d'un circuit ET (66), dont la seconde entrée est reliée à une conduite de début (133) pour l'indication du début de la mesure, la sortie du circuit ET (66) étant raccordée à la conduite de liaison (161).

Fig.1

0 099 500

Fig.2

Fig.3

11

Fig.4

Fig.5